# EUROPEAN PATENT SPECIFICATION

(11) **EP 3 327 720 B1**
(45) Date of publication and mention of the grant of the patent: **05.05.2021**
(21) Application number: 16827187.2
(22) Date of filing: 14.07.2016
(51) Int. Cl.: G10L 17/14, G10L 17/02, H04L 29/00, H04L 29/06, G10L 15/08, G10L 17/04

(54) **USER VOICEPRINT MODEL CONSTRUCTION METHOD AND APPARATUS**
VERFAHREN UND VORRICHTUNG ZUR KONSTRUKTION EINES BENUTZERSTIMMENAUSDRUCKSMODELLS
PROCÉDÉ ET APPAREIL DE CONSTRUCTION DE MODÈLE D'EMPREINTE VOCALE D'UTILISATEUR

(30) Priority: 23.07.2015 CN 201510438382
(43) Date of publication of application: 30.05.2018
(73) Proprietor: Advanced New Technologies Co., Ltd., George Town, Grand Cayman KY1-9008 (KY)
(72) Inventor: LING, Qing, Hangzhou 310099 (CN)
(74) Representative: Fish & Richardson P.C.
(86) International application number: PCT/CN2016/089962
(87) International publication number: WO 2017/012496

(56) References cited:
- CN-A- 102 238 189
- CN-A- 102 737 634
- CN-A- 102 760 434
- CN-A- 103 971 700
- CN-A- 104 202 486
- CN-A- 104 765 996
- US-A1- 2004 162 726
- US-A1- 2010 063 817
- US-A1- 2015 081 295

## Description

The present application claims priority to Chinese Patent Application No. 201510438382.0 filed on July 23, 2015 and entitled "METHOD, APPARATUS AND SYSTEM FOR CONSTRUCTING USER VOICEPRINT MODEL".

### Technical Field

The present application relates to the field of computer application technologies, and in particular, to a method and an apparatus for constructing a user voiceprint model.

### Background Art

A voiceprint is one of biometric features. Voiceprint recognition is a biometric recognition method for automatically recognizing the identity of a speaker according to the anthropophonic and behavioral features of the speaker. Security provided by voiceprint recognition is comparable with security provided by other biometric recognition technologies (such as a fingerprint and an iris), and it is only necessary to use a telephone/mobile phone or a microphone rather than other special apparatuses to implement a voice collection apparatus. The voiceprint recognition method is unrelated to spoken language, dialect, or accent, does not involve any privacy issues, and is widely applied. A sound signal is convenient for remote transmission and acquisition, and the voiceprint recognition method is especially advantageous in identity recognition applications based on telecommunications and networks.

Voiceprint recognition mainly includes two stages. The first stage is a registration stage in which a user needs to record a segment of voice to a system in advance, and the system constructs a voiceprint model for the user by using a voiceprint feature extracted from the registered voice, see for example US 2004/0162726 A1.

The second stage is an application stage in which a user speaks out a designated voice segment according to a system prompt, and the system automatically records the voice of the user and extracts a voiceprint feature, conducts a matching operation on the newly extracted voiceprint feature and the pre-constructed voiceprint model, and then recognizes the identity of the current user according to the matching degree of the two.

With development of computers and Internet technologies, voiceprint recognition has gradually infiltrated into people's daily life, for example, smart terminal applications, automatic telephone service systems, and so on. It can be known from the above introduction that the registration is an indispensable step in the whole voiceprint recognition process. However, the registration step will bring inconvenience for users to some extent, particularly for a special group that is not sensitive to new technologies, such as middle-aged and elderly people, and there is even a problem of whether a voiceprint can be registered successfully. In addition, in some cases, a user may be requested to record multiple voice segments during registration to improve the security or robustness of the system, and this will further increase the difficulty in use for the user.

### Summary of the Invention

According to the invention, there are provided a method for constructing a user voiceprint model as set forth in claim 1 and an apparatus for constructing a user voiceprint model as set forth in claim 2.

By applying the method for constructing a user voiceprint model provided by the embodiments of the present application, theoretically, a user voiceprint model can be constructed automatically in any application scenario where the voice of a user can be received. The receiving of voice information herein may be an operation necessary for implementing other functions by the user, and it is unnecessary to intentionally execute an operation of voiceprint information registration, thus facilitating usage by the user.

Correspondingly, in an application scenario requiring identity verification, if voice information of a user can be acquired and the voice information carries a keyword on which a voiceprint model has been constructed before, identity verification may be carried out automatically by using a voiceprint, thereby omitting complicated operations of other verification manners. Moreover, it is unnecessary for the user to intentionally speak out a verification password in the verification process.

### Brief Description of the Drawings

To describe the technical solutions in the embodiments of the present application or the prior art more clearly, the following briefly introduces the accompanying drawings required for describing the embodiments or the prior art. Apparently, the accompanying drawings described in the following are merely some embodiments recorded in the present application, and those of ordinary skill in the art may still derive other drawings from these accompanying drawings.
FIG. 1 is a schematic flowchart of a method for constructing a user voiceprint model according to the present application;
FIG. 2 is a schematic flowchart of a user identity verification method according to an example that is not covered by the claimed invention;
FIG. 3 is a schematic structural diagram of an apparatus for constructing a user voiceprint model according to the present application;
FIG. 4 is a schematic structural diagram of a user identity verification apparatus according to an example that is not covered by the claimed invention; and
FIG. 5 is a schematic structural diagram of a user identity verification system according to an example that is not covered by the claimed invention.

### Detailed Description

Voice is an important carrier for communication between humans. As technologies such as speech recognition develop rapidly, users have already been able to communicate with computers through voice in many scenarios, such as voice input and voice control. In other words, from the perspective of a computer, there are many opportunities to collect user voice information. Moreover, voice information of a user can be collected from a telephone message and a real-time telephone record of the user. Based on such actual condition, the present application provides a solution, which can implement voiceprint modeling of a user in any scenario where the voice of a user can be collected, without adding any additional registration operations for the user, thereby solving the problem in the prior art that the voiceprint registration operation is complicated.

The voiceprint recognition includes text-dependent voiceprint recognition and text-independent voiceprint recognition. A text-dependent voiceprint recognition system requires a user to pronounce according to specified content during registration. A voiceprint model of each user is established precisely. Moreover, the user also must pronounce according to the specified content during recognition. A desirable recognition effect can be achieved as voiceprint models of all users are "standard". However, the system requires cooperation of the user, and if the pronunciation of the user does not confirm to the specified content, the user cannot be correctly recognized. Theoretically, a text-independent recognition system may not specify the pronouncing content of the speaker. However, it is relatively difficult to establish a model, and no ideal recognition effect can be achieved during actual application.

To guarantee the recognition effect, the solution provided in the present application is proposed for the "text-dependent" voiceprint recognition technology, and then, a problem that needs to be solved is: how to enable a user to speak out the "specified content" without increasing an additional operation for the user.

During implementation of this solution, the inventor finds that: in a specific application scenario, a user has a very high probability to speak out a keyword related to the scenario. For example, when the user conducts product consultation by using voice (e.g., in a manner such as a telephone or a voice message), the user may almost inevitably speak out one or more of keywords of the product such as name, model, function, part, and normal fault. When the user conducts a voice control operation, many voice control instructions are also pre-defined, and there are a variety of similar scenarios. Based on such actual condition, for different scenarios where voiceprint recognition is applied, statistics may be made in advance on one or more high-frequency keywords appearing in these scenarios, and the high-frequency words are defined as the "specified content". In this way, the system may implement voiceprint modeling for the user once the user speaks out these keywords during voice interaction.

In order that those skilled in the art can better understand the technical solution in the present application, the technical solutions in the embodiments of the present application will be described in detail through the accompanying drawings in the embodiments of the present application. Apparently, the described embodiments are merely a part of embodiments of the present application, and are not all the embodiments.

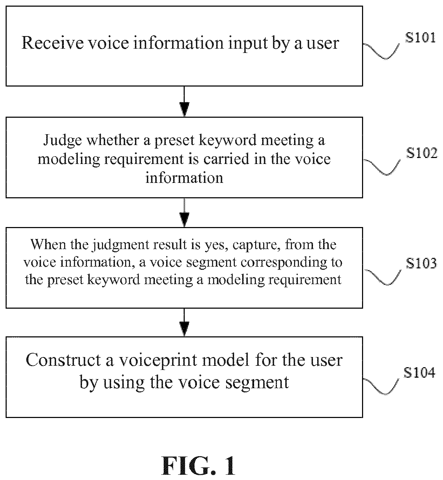

As shown in FIG. 1, a flowchart of a method for constructing a user voiceprint model according to the present application is shown, and the method may include the following steps:
S101: Voice information input by a user is received;
S102: Whether a preset keyword meeting a modeling requirement is carried in the voice information is judged;
S103: When the judgment result is yes, a voice segment corresponding to the preset keyword meeting a modeling requirement is captured from the voice information; and
S104: A voiceprint model for the user is constructed by using the voice segment.

The above solution will be further illustrated in detail in the following:
Theoretically, the solution of the present application can be implemented in any scenario where the voice of a user can be collected, such as voice input, voice control, and telephone message. Definitely, during actual application, the following factors further need to be considered: whether the scenario has a voiceprint recognition requirement, whether the identity of a currently speaking user can be determined, the length of the voice of the user (involving the computational complexity), whether a voice segment carrying a keyword can be collected effectively (involving the collection efficiency), and so on.

A typical application scenario is, for example, a "one sentence describes a problem" in an Interactive Voice Response (IVR) system. The system can confirm the identity of a user according to a caller ID or by means of verification information manually input by the user, or other manners. The voice length of "one sentence" is suitable for subsequent processing. Moreover, the user is very likely to speak out some keywords in many specific service scenarios. For example, in an online transaction scenario, keywords that may be involved include: order, receipt, delivery, amount, and so on. In a scenario such as bank and payment, keywords that may be involved include: transfer, balance, account, password, and so on.

In addition, when the user uses a personal terminal, a variety of voice control instructions used in either an operating system layer or various specific application layers may all be used for voice information collection during voiceprint modeling. First, the user may perform a variety of verification operations when using the terminal as a personal belonging. For example, the user may be required to input a gesture or a numerical password when unlocking a mobile phone or entering some specific applications, thus first meeting the requirement of user identity verification. In addition, the voice control instructions used either by the operating system or the specific application are not too long, many of which are also pre-defined. For example, the voice interaction function in an Android mobile phone is triggered by using an "OK Google" or "OK Google now" voice instruction. These keywords may all be used to implement user voiceprint modeling.

If the requirement on the computational complexity is not so high, a user call that has been actually accessed to a manual answering platform may be recorded, and voice of the user and voice of the manual answering platform are distinguished according to audio characteristics, such that only the voice part of the user is analyzed in subsequent steps. In this way, a voice segment carrying a keyword can be more effectively collected from a long and complete call of the user.

Definitely, the above several application scenarios are merely used for illustration, and should not be understood as limitation on the solution of the present application.

According to S101, the voice information of the user can be received in any application scenario. Definitely, the final requirement is to implement voiceprint modeling, and therefore, it is necessary to first confirm the identity of the current speaker in another manner (such as a user ID, a verification password, a gesture, a fingerprint, and so on).

In S102, it is judged whether a preset keyword meeting a modeling requirement is carried in the voice information. Here, one or more keywords may be preset according to actual requirements. Presetting multiple keywords is advantageous in that: on one hand, the probability of successfully modeling may be improved, that is, voiceprint modeling can be implemented as long as the user speaks out at least one of the multiple keywords; on the other hand, it may be required to use multiple voiceprint segments for verification together in some application scenarios having high security requirements.

In this step, whether a preset keyword is carried in the voice information needs to be determined by using a speech recognition related technology. A model of a speech recognition system generally includes two parts including an acoustic model and a language model, respectively corresponding to computation of a probability from voice to syllables and computation of a probability from syllables to words. According to an actual requirement of the solution of the present application, recognition on the voice information may be implemented from the following two perspectives:

### a) Using acoustic features:

Human languages are all composed of a series of sequential syllables, and consecutive sound information is referred to as a syllable stream. From the perspective of acoustics, a syllable stream may be divided into several independent syllables. In addition, each pronunciation syllable has its fixed audio feature. The speech recognition technology establishes an acoustic model based on the two aspects, thus implementing word segmentation on the syllable stream. However, in the present application, the technology may be directly utilized to implement recognition on the user voice information, and a specific solution includes the following steps:
dividing the voice information by using the acoustic model to obtain at least one voice segment; and
judging whether the obtained voice segment or a combination thereof matches the audio feature of the preset keyword meeting a modeling requirement, and if yes, determining that the preset keyword meeting a modeling requirement is carried in the voice information.

For example, the preset keywords include: transfer, balance, account, and password, and then, the system needs to pre-store audio data or audio feature data of the four keywords. If the received voice of the user is "query the balance", several voice segments (specific division results may be different according to different division algorithms, which are not discussed here) may be obtained first by dividing with an acoustic model, and it can be known upon comparison that these segments or combinations of segments include parts matching with the "balance" audio feature. Therefore, it can be determined that the keyword meeting a modeling requirement is carried in the voice information.

### b) Using language features:

Text word segmentation belongs to the field of natural language processing technologies. Compared with word segmentation on the pure acoustics level, the text word segmentation technology is more mature and has a better actual effect. In addition, it can be understood that a same pronunciation may correspond to multiple kinds of texts, and therefore, a better effect can be achieved by directly comparing text content during matching. In the present application, recognition of user voice information may be implemented by directly using a combination of the speech recognition technology and the text word segmentation technology. A specific solution includes the following steps:
conducting speech recognition on the voice information to obtain corresponding text information;
dividing the text information by using a language model to obtain at least one text segment; and
judging whether the obtained text segment or a combination thereof is consistent with the text content of the preset keyword meeting a modeling requirement, and if yes, determining that the preset keyword meeting a modeling requirement is carried in the voice information.

According to the above two solutions, those skilled in the art can make selections flexibly according to actual requirements. For example, according to characteristics of different languages, each word of a western language (such as English and French) has a relatively complete meaning, but each character in Chinese does not have this characteristic; therefore, the processing manner that merely utilizes acoustic features is more suitable for processing western languages at present. It is suggested that Chinese is processed with reference to features in language. Definitely, it should be noted that the present application is not focused on the speech recognition algorithm or word segmentation algorithm, and any technical measure can be applied to the present application as long as it can satisfy corresponding requirements.

If it has been confirmed in S102 that the preset keyword meeting a modeling requirement is carried in the user voice information, the corresponding voice segment will be further captured from the voice information in S103. If judgment is conducted based on the voice segment in S102, the voice segment is captured directly according to the matching result of the voice segment. If judgment is conducted based on the text segment in S102, the voice segment is captured according to a position of the corresponding voice segment obtained by reversely deducing from the matching result of the text segment. For example, a user said, "I want to query balance of the account", where "account" and "balance" are preset keywords meeting a modeling requirement. Relative positions of the two words in the whole voice information can be determined according to the processing procedure in S102, and then audio segments of the two words "account" and "balance" are captured.

In S104, voiceprint modeling is conducted by using the audio segment captured in S103. The specific modeling method is unrelated to the present application, and is not described in detail here. Finally, the modeling result is stored in association with the speaker identity identifier determined in S101, to form a voiceprint model library of the user.

By applying the above method, when the user uses other voice functions, voiceprint modeling may be conducted "incidentally", thus facilitating usage by the user. Moreover, using the "keywords" can both meet the "text dependent" modeling requirement and guarantee a high modeling success rate.

In addition, the above method can further be applied to updating of the voiceprint model in addition to being applied to registration of voiceprint information for the first time. A specific update strategy can be considered from the following two perspectives:

### 1) Improvement of a model:

The above procedure of constructing a voiceprint model supports multiple default keywords, and the user cannot necessarily speak out all the keywords during one voice interaction. However, the voice interaction of the user is a normal behavior, and therefore, after the construction of a voiceprint model is completed for the first time, voice information of the user can be collected again in the subsequent procedure of interaction with the user. If the newly collected voice information includes a keyword that is not included in the previous model, the new keyword may be utilized to complement the existing voiceprint model.

Specifically, for a particular user, assuming that a voiceprint model of the user currently exists, in S102, the "preset keyword meeting a modeling requirement" may be further defined as the "preset keyword that is not included in the current voiceprint model of the user."

For example, keywords designated by the system include: "transfer", "balance", "account" and "password". When a user X registers for voiceprint information for the first time, voiceprint models for two keywords, "account" and "balance", have been established for the user respectively. Thereafter, voice information "I want to modify the password of the account" of the user X is further collected. According to S102, it can be determined that "account" and "password" both belong to the preset keywords, wherein "password" is a preset keyword that is not included in the current voiceprint model of the user X. Therefore, voiceprint modeling is conducted by using the "password" subsequently, and the modeling result is added to a voiceprint model library of the user X.

By applying this method, the voiceprint model of the user may be constantly improved, to meet various special requirements. Moreover, if the system has a higher requirement on the security performance, it may be specified that the number of keywords included in a voiceprint model of the user must be greater than a certain number before the keywords are applied. When voiceprint modeling of the user cannot be implemented only by conducting voice information collection once, the method of this embodiment may be adopted to complete voiceprint modeling of the user by collecting the voice information of the user for multiple times.

### 2) Training of a model:

The biometric recognition technology and the machine learning technology are closely related. In many application scenarios, a model is generally trained by collecting samples for multiple times, thereby improving the performance in multiple aspects such as accuracy of recognition and fault tolerance. For the solution of the present application, training of the voiceprint model may also be accomplished by collecting voice information of a same user for a same keyword for multiple times.

It can be seen that the requirement here is opposite to the requirement of 1). Specifically, to implement multiple times of collection of a voiceprint sample for a same keyword, in S102, the "preset keyword meeting a modeling requirement" should be further defined as the "preset keyword that has been included in the current voiceprint model of the user."

For example, keywords designated by the system include: "transfer", "balance", "account" and "password". When a user X registers for voiceprint information for the first time, voiceprint models for two keywords, "account" and "balance", have been established for the user respectively. In the subsequent voice information collection process, attention may only be paid to the two keywords, "account" and "balance", such that the voiceprint models of the two keywords are trained constantly.

In actual application, some limitation conditions may also be set to avoid collecting the voice information of the user limitlessly. For example, if the number of voiceprint samples collected for a keyword has reached a threshold, no voiceprint sample will be collected for the keyword subsequently.

Furthermore, according to a specific application requirement and the selected training algorithm, samples collected for multiple times may be processed by using a method such as averaging and simultaneous retaining, which does not need to be limited in the present application.

The above two update strategies may be implemented independently or in combination. In fact, from a macroscopic perspective, implementation of the two functions will not be affected even if the "preset keyword meeting a modeling requirement" is not defined. In other words, each time when S102 is performed, all keywords carried in this voice information are acquired as much as possible. A new voiceprint model is established for a keyword that is not included in the previous model, and a keyword that has been included in the previous model is used for training the previous model. Moreover, one of the above two functions may be selected for implementation. It is important that applying the solution of the present application enables learning without making any troubles for the user, thus gradually perfecting the voiceprint model of the user.

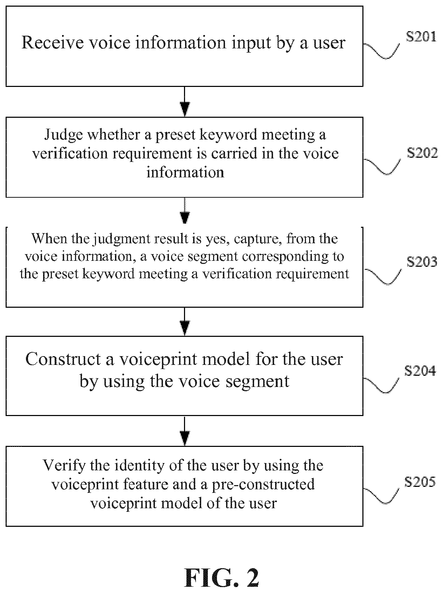

The method for constructing a user voiceprint model provided by the present application is introduced above. Based on the similar concept, the present application further provides a voiceprint-based user identity verification method, which is not covered by the claimed invention. Referring to FIG. 2, the method may include the following steps:
S201: Voice information input by a user is received.
S202: Whether a preset keyword meeting a verification requirement is carried in the voice information is judged.
S203: When the judgment result is yes, a voice segment corresponding to the preset keyword meeting a verification requirement is captured from the voice information.
S204: A voiceprint feature of the voice segment is extracted.
S205: The identity of the user is verified by using the voiceprint feature and a pre-constructed voiceprint model of the user.
S201 to S203 are basically identical to S101 to S103 in term of technical implementation, and a difference only lies in different application scenarios. S204 to S205 are normal voiceprint verification steps, and will not be introduced in detail. The difference between the solution of the present application and the conventional voiceprint verification solution is emphasized in the following.

It can be known according to the introduction of the background art of the present application that the voiceprint recognition mainly includes two steps including registration and application, wherein the registration step provides necessary data preparation for the application section. The voiceprint modeling implemented by applying the method of the present application is principally applicable to various application requirements. In addition, some special application requirements may also be met according to the characteristics of the solution of the present application.

Strictly speaking, the application scenarios of the biometric feature recognition technologies including voiceprint recognition may be further finely classified into two categories: verification and identification. The verification refers to authenticating whether the user is the identity declared by himself/herself, e.g., a fingerprint lock, a voiceprint lock, and so on. The identification refers to determining the identity of the user, for example, the public security organ determines a criminal by investigating fingerprints or records of a crime scene. It is easy to know that the verification has a less requirement than the identification.

The technical solution provided in the present application is proposed based on the "verification" requirement, and has at least the following characteristics compared with the normal voiceprint verification.

First, although the solution provided by the present application is based on the "text dependent" voiceprint technology, when the solution is applied, it is unnecessary for the user to speak out the "specified content" intentionally, and it is also unnecessary for the system to prompt or guide the user intentionally. This is because all the above requirements can be met incidentally when the user performs other operations.

For example, in a self-service voice service system of a bank, when a user dials a service number, and speaks out "query the balance" in the section of "one sentence describes a problem" according to a self-service voice prompt, the system may conduct speech recognition, semantic recognition, requirement analysis, and other processing according to the information, and determine that the service relates to personal privacy and the identity of the user needs to be further authenticated. The conventional processing manner may be that a prompt "Please input your account password, and end with #" is provided for the user, and then the user operates according to the prompt to complete verification. By utilizing the solution provided in the present application, if modeling for the keyword "balance" has been completed for the user previously, after the user speaks out "query the balance", the verification can be implemented by using the voiceprint, and it is unnecessary for the user to input a password. The convenience of the voiceprint verification is enjoyed when it is unnecessary to speak out the "specified content" intentionally.

Next, specific content spoken by the user is uncertain; however, according to characteristics of the "keywords", there is actually a high probability for the user to speak out these keywords, and the probability may be obviously improved as the number of keywords is increased. Even if the voiceprint verification is failed, the normal verification manner may be further used. For example, the manual inputting a password in the above example may be used, and this will not make additional troubles for the user.

Further, by defining the "preset keyword meeting a verification requirement" in S203, the system performance may be further improved or specific requirements may be further met. For example, the "preset keyword meeting a verification requirement" may be defined as: a preset keyword that has been included in the current voiceprint model of the user, to avoid the system from performing invalid processing subsequently such as voiceprint extraction or matching. Moreover, for an application scenario having a higher requirement on security, such as payment transaction, the number of keywords carried in the user voice may also be defined in the "preset keyword meeting a verification requirement". If the number requirement is not met, it is considered that this manner is not secure enough, and at this time, the voiceprint verification manner may be abandoned and another securer manner may be used instead.

Finally, it can be understood that the voiceprint modeling method and the voiceprint verification method provided by the present application are based on the same principle, and therefore, the two solutions may be integrated in various manners. For example, after the verification procedure, the voice information of the user used in this verification may still be used to perfect the voiceprint model. In a typical application, it is first judged whether the voice information used in this verification carries a preset keyword that is not included in the current voiceprint model of the user, and if yes, a voice segment corresponding to the keyword is captured from the voice information, and the voiceprint model of the user is updated by using the voice segment. The specific updating manner may be obtained with reference to the previous embodiments, and will not be repeated here. In addition, from the perspective of technical procedure, whether the identity verification is successful does not affect the updating of the voiceprint model. Definitely, if improvement of the security is considered, the operation of updating the voiceprint model may be further triggered when the user identity verification succeeds. Moreover, the "identity verification succeeds" is not limited to the voiceprint identity verification.

To sum up, compared with the prior art, the present application is mainly advantageous in that: registration and verification of user voiceprint information can be implemented incidentally when the user performs other voice-based operations, thus facilitating usage by the user. Moreover, by setting a particular keyword for a particular application scenario, the advantage of "text dependent" can be retained, and a higher success rate can also be guaranteed in the original uncertain application scenario.

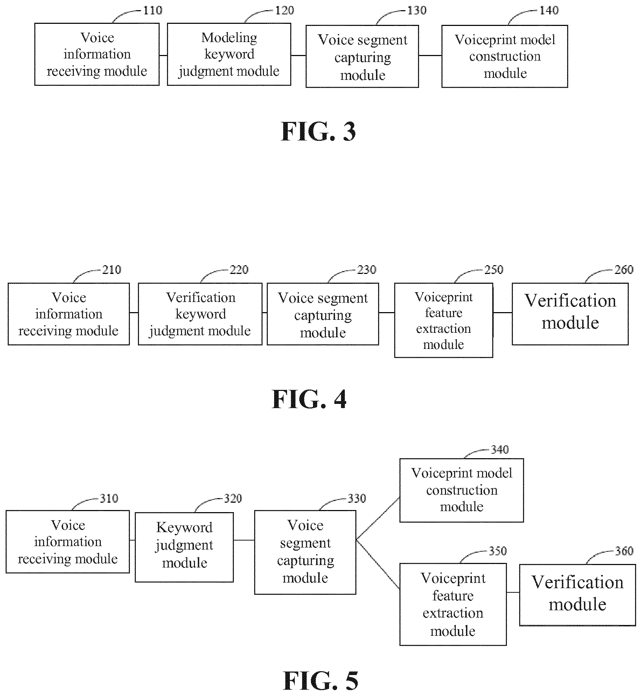

Corresponding to the above method embodiment, the present application further provides an apparatus for constructing a user voiceprint model. Referring to FIG. 3, the apparatus may include:
a voice information receiving module 110 configured to receive voice information input by a user;
a modeling keyword judgment module 120 configured to judge whether a preset keyword meeting a modeling requirement is carried in the voice information;
a voice segment capturing module 130 configured to, when the judgment result is yes, capture, from the voice information, a voice segment corresponding to the preset keyword meeting a modeling requirement; and
a voiceprint model construction module 140 configured to construct a voiceprint model for the user by using the voice segment.

According to a specific implementation of the present application, the modeling keyword judgment model 120 may specifically be configured to:
when the voiceprint model of the user already currently exists, judge whether a preset keyword that is not included in the voiceprint model is carried in the voice information;
   or
when the voiceprint model of the user already currently exists, judge whether a preset keyword that has already included in the voiceprint model is carried in the voice information.

According to a specific implementation of the present application, the voiceprint model construction model 140 may specifically be configured to:
when the voiceprint model of the user already currently exists, update the voiceprint model by using the voice segment.

According to a specific implementation of the present application, the modeling keyword judgment model 120 may specifically be configured to:
divide the voice information by using an acoustic model to obtain at least one voice segment; and
judge whether the obtained voice segment or a combination thereof matches the audio feature of the preset keyword meeting a modeling requirement, and if yes, determine that the preset keyword meeting a modeling requirement is carried in the voice information.
Or
the modeling keyword judgment model 120 may further specifically be configured to:
   conduct speech recognition on the voice information to obtain corresponding text information;
   divide the text information by using a language model to obtain at least one text segment; and
   judge whether the obtained text segment or a combination thereof is consistent with the text content of the preset keyword meeting a modeling requirement, and if yes, determine that the preset keyword meeting a modeling requirement is carried in the voice information.

Corresponding to the above method, the present application further provides a voiceprint-based user identity verification apparatus which is not covered by the claimed invention. Referring to FIG. 4, the apparatus may include:
a voice information receiving module 210 configured to receive voice information input by a user;
a verification keyword judgment module 220 configured to judge whether a preset keyword meeting a verification requirement is carried in the voice information;
a voice segment capturing module 230 configured to, when the judgment result is yes, capture, from the voice information, a voice segment corresponding to the preset keyword meeting a verification requirement;
a voiceprint feature extraction module 250 configured to extract a voiceprint feature of the voice segment; and
a verification module 260 configured to verify the identity of the user by using the voiceprint feature and a pre-constructed voiceprint model of the user.

The present application further provides a voiceprint-based user identity verification system, and the system may include the apparatus for constructing a user voiceprint model and the user identity verification apparatus as described above.

In fact, functions implemented by some modules in the above two apparatuses are completely the same, for example:
the voice information receiving module 110 and the voice information receiving module 210;
the voice segment capturing module 130 and the voice segment capturing module 230;
and a difference between the verification keyword judgment module 120 and the verification keyword judgment module 220 merely lies in different rules according to which the judgment is conducted. Therefore, during actual applications, these identical or similar modules may be completely multiplexed in the system, as shown in FIG. 5.

The voice information receiving module 310 integrates the functions of the voice information receiving module 110 and the voice information receiving module 210.

The keyword judgment module 320 integrates the functions of the verification keyword judgment module 120 and the verification keyword judgment module 220.

The voice segment capturing module 330 integrates the functions of the voice segment capturing module 130 and the voice segment capturing module 230.

Functions of the voiceprint model construction module 340, the voiceprint feature extraction module 350, and the verification module 360 are respectively identical to the functions of the modules of the same names in the above apparatuses.

Implementation processes of functions and effects of all the units in the above apparatus may specifically refer to the implementation processes of corresponding steps in the above method, and are not repeated herein.

Based on the foregoing description of the implementation manners, a person skilled in the art may clearly understand that the present application may be implemented by software in combination with a necessary universal hardware platform. Based on such understanding, the technical solution of the present application essentially, or the portion contributing to the prior art may be embodied in the form of a software product, which is not covered by the claimed invention. The software product may be stored in a storage medium, such as a ROM/RAM, a magnetic disk, or an optical disc, and include several instructions that enable a computer device (which may be a personal computer, a server, a network device, or the like) to execute the method in all the embodiments or certain portions of the embodiments of the present application.

Various embodiments in the specification are described in a progressive manner. The same or similar parts between the embodiments may be referenced to one another. In each embodiment, the portion that is different from other embodiments is focused and described. Especially, the apparatus or system embodiment is basically similar to the method embodiment, so that it is described simply, and for related parts, reference may be made to the description of the parts in the method embodiment. The apparatus or system embodiment described above is merely illustrative, where modules illustrated as separated parts may be or may not be physically separated. During implementation of the present application, the functions of the modules may be implemented in the same one or more pieces of software and/or hardware. The objective of the solution of this embodiment may be implemented by selecting a part of or all modules thereof according to actual requirements. Those of ordinary skill in the art may understand and implement the present application without creative efforts.

Specific implementations of the present application are described above. It should be noted that, for those of ordinary skill in the art that, several improvements and modifications can be made without departing from the scope of the present invention, which is defined by the claims.

## Claims

1. A method for constructing a user voiceprint model, comprising:
receiving first voice information input by a user (S101) having a speaker identity, wherein the user has not registered a voiceprint, wherein the first voice information input is received for a function other than voiceprint information registration, and wherein the user is operating in a particular application scenario;
confirming the speaker identity of the user using information other than the first voice information input;
determining whether a preset keyword meeting a modeling requirement is carried in the first voice information (SI02), wherein whether a preset keyword is carried in the first voice information is determined using a speech recognition technology, wherein the preset modeling requirement is satisfied by all preset keywords carried in the first voice information, and wherein the preset keyword is a keyword set for the particular application scenario;
when the determination result is yes, capturing, from the first voice information, a voice segment corresponding to the preset keyword meeting a modeling requirement (S103);
constructing a voiceprint model for the user by using the voice segment (SI04); and
storing the constructed voiceprint model in association with a speaker identity identifier to form a voiceprint model library of the user.

2. An apparatus for constructing a user voiceprint model, comprising a plurality of modules configured to perform the method of claim 1.

## Patentansprüche

1. Verfahren zum Erstellen eines Benutzerstimmabdruckmodells, das Folgendes umfasst:
Empfangen erster Stimminformationen, die durch einen Benutzer (S101) mit einer Sprecheridentität eingegeben werden, wobei der Benutzer keinen Stimmabdruck registriert hat, wobei die eingegebenen ersten Stimminformationen für eine Funktion empfangen werden, bei der es sich nicht um eine Stimmabdruckinformationsregistrierung handelt, und wobei der Benutzer in einem bestimmten Anwendungsszenario arbeitet;
Bestätigen der Sprecheridentität des Benutzers unter Verwendung von Informationen, die nicht die eingegebenen ersten Stimminformationen sind;
Bestimmen, ob ein voreingestelltes Schlüsselwort, das eine Modellierungsanforderung erfüllt, in den ersten Stimminformationen (S102) geführt wird, wobei ob ein voreingestelltes Schlüsselwort in den ersten Stimminformationen geführt wird unter Verwendung einer Spracherkennungstechnologie bestimmt wird, wobei die voreingestellte Modellierungsanforderung durch alle in den ersten Stimminformationen geführten voreingestellten Schlüsselwörter erfüllt wird und wobei das voreingestellte Schlüsselwort ein Schlüsselwort ist, das für das bestimmte Anwendungsszenario eingestellt ist;
wenn das Bestimmungsergebnis ja lautet, Erfassen, aus den ersten Stimminformationen, eines Stimmsegments, das dem voreingestellten Schlüsselwort, das eine Modellierungsanforderung erfüllt, entspricht (S103);
Erstellen eines Stimmabdruckmodells für den Benutzer durch Verwenden des Stimmsegments (S104); und
Speichern des erstellten Stimmabdruckmodells in Verbindung mit einer Sprecheridentitätskennung, um eine Stimmabdruckmodellbibliothek des Benutzers zu bilden.

2. Einrichtung zum Erstellen eines Benutzerstimmabdruckmodells, umfassend mehrere Module, die zum Durchführen des Verfahrens nach Anspruch 1 ausgelegt sind.

## Revendications

1. Procédé de construction d'un modèle d'empreinte vocale d'utilisateur, comprenant :
la réception d'une première entrée d'information vocale provenant d'un utilisateur (S101) ayant une identité de locuteur, l'utilisateur n'ayant pas enregistré d'empreinte vocale, la première entrée d'information vocale étant reçue en vue d'une fonction différente d'un enregistrement d'information d'empreinte vocale, et l'utilisateur opérant dans un scénario d'application particulier ;
la confirmation de l'identité de locuteur de l'utilisateur en utilisant des informations autres que la première entrée d'information vocale ;
la détermination du fait qu'un mot-clé préétabli satisfaisant à une exigence de modélisation est porté ou non dans la première information vocale (S102), le fait qu'un mot-clé préétabli soit porté ou non dans la première information vocale étant déterminé en utilisant une technologie de reconnaissance vocale, l'exigence de modélisation préétablie étant satisfaite par tous les mots-clés préétablis portés dans la première information vocale, et le mot-clé préétabli étant un mot-clé défini pour le scénario d'application particulier ;
si le résultat de détermination est oui, la capture, à partir de la première information vocale, d'un segment vocal correspondant au mot-clé préétabli satisfaisant à une exigence de modélisation (S103) ;
la construction d'un modèle d'empreinte vocale pour l'utilisateur en utilisant le segment vocal (S104) ; et
le stockage du modèle d'empreinte vocale construit en association avec un identifiant d'identité de locuteur pour former une banque de modèles d'empreintes vocales de l'utilisateur.

2. Appareil de construction d'un modèle d'empreinte vocale d'utilisateur, comprenant une pluralité de modules configurés pour mettre en œuvre le procédé selon la revendication 1.
